Europäisches Patentamt

**European Patent Office**

**Office européen des brevets**

(19)

(11) Publication number: **0 157 529**
A2

# (12) EUROPEAN PATENT APPLICATION

(21) Application number: **85301864.6**

(22) Date of filing: **18.03.85**

(51) Int. Cl.⁴: **G 02 B 6/28**

(30) Priority: **24.03.84 GB 8407689**

(43) Date of publication of application: **09.10.85**
**Bulletin 85/41**

(84) Designated Contracting States: **AT BE CH DE FR GB IT LI LU NL SE**

(71) Applicant: **PLESSEY OVERSEAS LIMITED, Vicarage Lane, Ilford Essex IGI 4AQ (GB)**

(72) Inventor: **Pendleton-Hughes, Simon Mark, 14 Austin Street, Northampton (GB)**

(74) Representative: **Nicholson, Ronald, Intellectual Property Department The Plessey Company plc 2-60 Vicarage Lane, Ilford Essex IG1 4AQ (GB)**

(54) Improvements relating to optical wavelength-selective arrangements.

(57) An optical wavelength-selective arrangement which comprises an optical fibre input/output assembly formed by a plurality of optical fibres having co-planar end faces in close proximity with one another and defining a circular or similar array and an end face circumvented by said circular array, lens means optically aligned with the end faces of the optical fibres for collimating light emerging from any of said end faces or for focusing light on to selected optical fibre end faces and a group of wavelength-selective filters located on the side of the lens means remote from the array of optical fibre end faces and individually angularly positioned relative to the optical axis of the lens means so as to cause light of different wavelengths emerging from the lens means to be selectively reflected back through the latter and focused thereby on to one or more selected end faces of the optical fibres.

## IMPROVEMENTS RELATING TO OPTICAL WAVELENGTH -

## SELECTIVE ARRANGEMENTS

This invention relates to optical wavelength-selective arrangements such as may be used for wavelength division multiplexing/de-multiplexing arrangements and is directed principally to improving the overall efficiency and compactness of such optical wavelength-selective arrangements embodying optical fibres.

According to the present invention, there is provided an optical wavelength-selective arrangement comprising an optical fibre input/output assembly formed by a plurality of optical fibres having co-planar end faces in close proximity with one another and defining a circular or similar array and an end face circumvented by said circular array, lens means optically aligned with the end faces of the optical fibres for collimating light emerging from any of said end faces or for focusing light on to selected optical fibre end faces and a group of wavelength-selective filters located on the side of the lens means remote from the array of optical fibre end faces and individually angularly positioned relative to the optical axis of the lens means so as to cause light of different wavelengths emerging from the lens means to be selectively reflected back through the latter and focused thereby on to one or more selected end faces of the optical fibres.

When the arrangement according to the invention is used as an optical wavelength division multiplexer/ de-multiplexer arrangement, light of different wavelengths emerging from the respective optical fibre end faces defining the circular array will be collimated by the lens means and directed on to the group of angled wavelength-selective filters which will reflect the light of different wavelengths back into the lens means in appropriate directions relative to the optical axis of the lens means and focused by the lens means on to the aforesaid circumvented optical fibre end face. In the case of a de-multiplexing operation, light of mixed wavelengths emerging from the circumvented optical fibre end face will be collimated by the lens means and directed on to the group of wavelength-selective filters which will respectively reflect light of different wavelengths back into the lens means along appropriate paths for the focusing thereof on to different selected end faces of the aforesaid circular array.

The wavelength-selective arrangement according to the invention may also be used as a wavelength-selective switching device by arranging for relative rotation between the wavelength-selective filter assembly and the optical fibre end face array about the optical axis of the lens means. By this arrangement, light of one of a number of different wavelengths may be selectively applied to one of the optical fibre end faces of the circular array, as required, by appropriate angular rotation of the filter

0157529

assembly or the optical fibre end face array.

In carrying out the present invention, the optical fibre assembly may comprise a closely packed bundle of monomode or multimode optical fibres conveniently contained within a tubular housing (e.g. glass capilliary tube) of appropriate bore dimensions for holding the optical fibres in their requisite positions so that they define the aforesaid co-planar end face array at one end of the tubular housing.

The lens means preferably comprises a rod-shaped GRIN lens which serves the dual function of collimating light received from the optical fibre end face array and of focusing light reflected back from the wavelength-selective filter assembly on to a selected end face of the optical fibre assembly.

The arrangement of closely packed optical fibres and the use of a closely stacked group of wavelength-selective filters in combination with the preferred use of a rod-like GRIN lens, enables a relatively simple, compact multi-channel multiplexer/de-multiplexer of relatively low cost and ease of manufacture to be produced, having relatively low losses for the following reasons:-

a)  Low off-axis lens aberrations due to the use of a closely packed optical fibre array;

b)  Individual angularly positioned wavelength-selective filters are used;

c)   Low lens aberrations due to minimum amount of collimating and focusing carried out for a given ·number of channels;

d)   Minimum number of optical components;

e)   Short optical path lengths;

f)   Elimination of the need to connect a number of arrangements together to provide the desired number of channels.


By way of example, an embodiment of the invention will now be described with reference to the accompanying drawing in which:

Figure 1 shows a diagram of a multi-channel wavelength division multiplexer/de-multiplexer arrangement according to the invention; and,

Figure 2 shows enlarged elevational and end views of the optical fibre assembly shown in the arrangement of Figure 1.

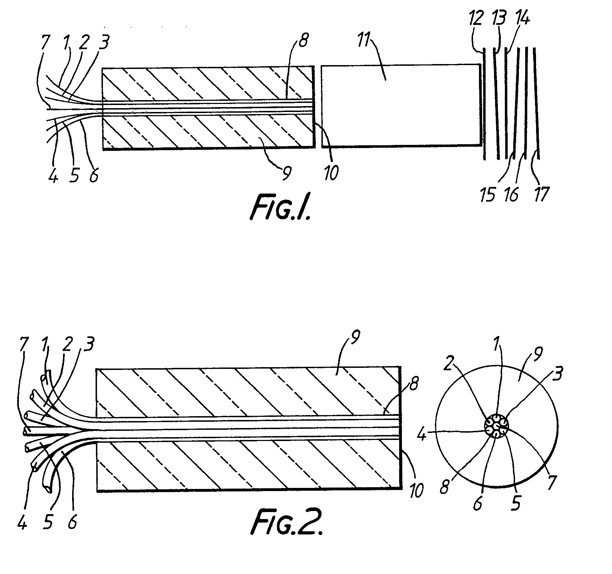

Referring to the drawing, the specific arrangement illustrated comprises a bundle of seven optical fibres 1 to 7 which are closely packed inside the bore 8 of a glass capilliary tube 9.  As can be seen from the end view in Figure 2, the end faces of the optical fibres 1 to 7 which are co-planar with one another and with the end 10 of the glass tube 9, define a circular array which circumvents a single inner (i.e. central) end face.  As will be appreciated, this optical fibre assembly is extremely compact and, moreover, the axes of the optical fibres 1 to 6 are substantially equidistant from the optical axis of the central optical fibre 7. This latter feature contributes significantly to the efficiency of the arrangement as will be described later.

The co-planar end faces of the closely packed optical fibres 1 to 7 are aligned with a small diameter rod-like GRIN lens 11 which serves to collimate light received from the end face (s) of any of the optical fibres 1 to 7. At the other end of the lens 11 a stack of wavelength-selective dichroic filters 12 to 17 is provided and these filters, each of which appertain to a different wavelength, are appropriately tilted in different planes re_ative to the optical axis of the lens 11 so that any light reflected by the respective filters will be focussed by the lens 11 on to the end face of the central optical fibre 7 when the arrangement is functioning as a wavelength division multiplexer and on to different end faces of the optical fibres 1 to 6 when the arrangement is functioning as a de-multiplexer.

It will be understood that during multiplexing the far ends of the respective optical fibres 1 to 6 (i.e. input fibres) may be coupled to light-emitting diodes producing light of different wavelengths. The light of these different wavelengths emerging from the co-planar end faces of the optical fibres 1 to 6 is collimated by the GRIN lens 11 and directed on to the filters 12 to 17. The light beams reflected back into the lens 11 from filters 12 to 17 are all focused on to the end face of the optical fibre 7 (i.e. output fibre) and the consequential multiplexed signal may be detected by a detector (not shown) (including de-multiplexer) at the far end of the optical fibre 7. During de-multiplexing the mixed wavelength signal arriving on the optical fibre 7 (i.e. input fibre) is divided by the filter assembly into signals of the individual wavelengths and these are focused by the GRIN lens 11 on to the respective end faces of the optical fibres 1 to 6 (i.e. output fibres) which will be connected to detectors (not shown).

Since the centres of the end faces of optical fibres 1 to 6 are substantially equidistant from the centre of the end face of the central optical fibre 7 and the distance concerned is very small due to the close packing of the fibres in the glass tube 9 the arrangement is particularly efficient since the GRIN lens 11 captures all the reflected light from the filters 12 to 17 which does not occur in conventional linear optical fibre array multiplexers/de-multiplexers using dichroic filters due to the greater filter angles which are necessary. Moreover, all of the reflected light focused by the lens 11 on to the fibre end faces will be well within the cone of acceptance of the parallel optical fibres 1 to 7. Still further, the reduced angles of tilt of the wavelength-selective filters enables these to be stacked more closely thereby enabling the distance of the filter 17 which is furthest from the lens

0157529

11 to be reduced and thereby reduce optical losses.

It will also be appreciated from the arrangement illustrated that it consists of few components and all of these are relatively cheap and simple to manufacture and, moreover, the lengths of the optical paths through the arrangement are kept to a minimum.

CLAIMS:

1. An optical wavelength-selective arrangement comprising an optical fibre input/output assembly formed by a plurality of optical fibres having co-planar end faces in close proximity with one another and defining a circular or similar array and an end face circumvented by said circular array, lens means optically aligned with the end faces of the optical fibres for collimating light emerging from any of said end faces or for focusing light on to selected optical fibre end faces and a group of wavelength-selective filters located on the side of the lens means remote from the array of optical fibre end faces and individually angularly positioned relative to the optical axis of the lens means so as to cause light of different wavelengths emerging from the lens means to be selectively reflected back through the latter and focused thereby on to one or more selected end faces of the optical fibres.

2. An optical wavelength-selective arrangement as claimed in claim 1, in which the optical fibre assembly comprises a closely packed bundle of monomode or multimode optical fibres conveniently contained within a tubular housing of appropriate bore dimensions for holding the optical fibres in their requisite positions so that they define the aforesaid co-planar end face array at one end of the tubular housing.

3.  An optical wavelength-selective arrangement as claimed in claim 2, in which the tubular housing comprises a glass capilliary tube.

4.  An optical wavelength-selective arrangement as claimed in any preceding claim, in which the lens means comprises a rod shaped GRIN lens which serves the dual function of collimating light received from the optical fibre end face array and a focusing light reflected back from the wavelength-selective filter assembly on to a selected end face of the optical fibre assembly.

5.  An optical wavelength division multiplexer/ de-multiplexer arrangement including an optical wavelength-selective arrangement as claimed in any preceding claim, in which the light of different wavelengths emerging from the respective optical fibre end faces defining the circular array is arranged to be collimated by the lens means and directed on to the group of angled wavelength-selective filters which will reflect the light of different wavelengths back into the lens means in appropriate directions relative to the optical axis of the lens means

-10-

and focused by the lens means on to the aforesaid circumvented optical fibre end face, the light of mixed wavelengths emerging from the circumvented optical fibre end face in a de-multiplexing operation being collimated by the lens means and directed on to the group of wavelength selective filters which will respectively reflect light of different wavelengths back into the lens means along appropriate paths for the focusing thereof on to different selected end faces of the aforesaid circular array.

6.   A wavelength-selective switching device comprising an optical wavelength-selective arrangement as claimed in any of claims 1 to 4, in which means is provided for producing relative rotation between the wavelength selective filter assembly and the optical fibre end face array about the optical axis of the lens means whereby light of one of a number of different wavelengths may be selectively applied to one of the optical fibre end faces of the circular array as required by appropriate angular rotation of the filter assembly or the optical fibre end face array.

1/1

FIG.1.

FIG.2.